# EUROPÄISCHE PATENTSCHRIFT

(11) **EP 0 540 832 B1**
(45) Veröffentlichungstag und Bekanntmachung des Hinweises auf die Patenterteilung: **25.10.1995**
(21) Anmeldenummer: 92113480.5
(22) Anmeldetag: 07.08.1992
(51) Int. Cl.: H05B 7/06, F27D 11/10, F27B 3/08

(54) **Anode für einen Gleichstrom-Lichtbogenofen**
Anode for a direct-current arc furnace
Anode pour un four à arc à courant continu

(30) Priorität: 12.08.1991 DE 4126627
(43) Veröffentlichungstag der Anmeldung: 12.05.1993
(73) Patentinhaber: DEUTSCHE VOEST-ALPINE INDUSTRIEANLAGENBAU GMBH, 40094 Düsseldorf (DE)
(72) Erfinder: Nix, Edgar, W-4030 Ratingen (DE)
(74) Vertreter: Pfenning, Meinig & Partner

(56) Entgegenhaltungen:
- EP-A- 0 422 406

## Beschreibung

Die Erfindung betrifft eine Anode für einen Gleichstrom-Lichtbogenofen nach dem Oberbegriff des Anspruchs 1.

Aus der EP-A-0 422 406 ist eine Anode für einen Gleichstrom-Lichtbogenofen bekannt, bei der der Bereich des Ofens, der die Schmelze aufnimmt, mit einer elektrisch leitenden Feuerfest-Ausmauerung versehen ist und an deren Außenseite ein ring- bzw. zylinderförmiger Stromleiter elektrisch leitend angelegt ist.

Außer dem Stromleiter, der vorzugsweise ein Kupferring sein soll, besteht die Anode aus mehreren Schichten, die aus Materialien mit unterschiedlichen Eigenschaften bestehen. Die Schicht, die direkt mit der Schmelze in Verbindung steht, ist aus einem elektrisch leitenden und feuerfesten Material, wie z.B. Karbon-Magnesit zusammengesetzt. In Bereichen, die nicht mit der Schmelze in Berührung kommen, besteht die Ausmauerung aus Graphitsteinen, die eine wesentlich bessere Leitfähigkeit als das Karbon-Magnesit aufweisen.

Der gesamte Schichtaufbau und auch der den Ofen umgebende Stromleiter sind rotationssymmetrisch aufgebaut, so daß in radialer Richtung ein relativ homogenes elektrisches Strömungsfeld aufgebaut wird. Das daraus resultierende Magnetfeld hält den Lichtbogen in einer zentralen Position.

Mit dieser Anoden-Ausführung für einen Gleichstrom-Lichtbogenofen ist eine gleichmäßige Temperaturverteilung des Schmelzgutes sichergestellt, wenn nicht außerhalb des Ofengefäßes vorhandene Magnetfelder, die zum Beispiel durch die Anordnung der Zu- oder Ableitungskabel hervorgerufen werden, eine Störung dieser Symmetrie zur Folge haben und den Lichtbogen in unerwünschter Weise ablenken.

Es ist auch nicht möglich, bestimmte Bereiche der Schmelze gezielt stärker zu erwärmen, wie dies zum Beispiel bei einem Ofen mit Erkerabstich erforderlich ist. Ebenso ist es nicht möglich, die Bewegung im Schmelzbad in gewünschter Weise zu beeinflussen.

Aus der DE-A-40 35 233 ist bekannt, die durch außerhalb des Ofengefäßes befindliche Magnetfelder verursachte Ablenkung des Lichtbogens durch zusätzliche Magnetfelder, die durch am Ofenboden angeordnete stromdurchflossene Leiter erzeugt werden, wieder aufzuheben.

Weiter ist aus der DE-A-34 23 677 ein Gleichstrom-Lichtbogenofen bekannt, bei dem besonderer Wert auf die symmetrische Auslegung der als Anode dienenden Bodenelektrode gelegt wird. Bei diesem Ofen sind auch die Stromzuführungen vom Gleichrichter zur Bodenelektrode symmetrisch angeordnet. Diese Anordnung wurde gewählt, um jegliche Einflüsse auf die Ausbildung des magnetischen Feldes, die seine Symmetrie negativ beeinflussen und somit eine Auslenkung des Lichtbogens bewirken, zu verhindern.

Die in den beiden vorgenannten Offenlegungsschriften beschriebenen Lösungen haben erhebliche Nachteile, da sie mit einem großen Aufwand an elektrischer Ausrüstung verbunden sind.

Hier setzt die Erfindung ein, deren Aufgabe es ist, mit geringem Aufwand eine örtlich gezielte Erwärmung des Schmelzbades und definierte Bewegungen in der Schmelze zu erreichen sowie einen unerwünschten Einfluß etwaiger größerer Magnetfelder auf den Lichtbogen zu kompensieren.

Erfindungsgemäß wird diese Aufgabe durch die im kennzeichnenden Teil des Anspruchs 1 genannten Merkmale gelöst.

Vorteilhafte Weiterbildungen der erfindungsgemäßen Anode ergeben sich aus den Unteransprüchen.

Durch die sich in Umfangsrichtung ändernden elektrischen Eigenschaften der leitenden Ausmauerung und/oder des Stromleiters der erfindungsgemäßen Anode wird gezielt Einfluß auf die Stromverteilung und damit auf die Ausbildung des Magnetfeldes genommen. Es wirkt sich besonders bei einem exzentrischen Bodenanstich vorteilhaft aus, wenn die Bereiche, die in Bezug auf die Kathodenachse entgegengesetzt zur Abstichöffnung liegen, einen geringeren elektrischen Widerstand und dadurch einen höheren Stromdurchfluß aufweisen, wodurch der Brennfleck des Lichtbogens von der Kathode ausgehend in Richtung dieser Abstichöffnung abgelenkt und die Schmelze damit in deren Bereich stärker erwärmt wird als in den anderen Bereichen. Wenn der Lichtbogen in Richtung der Achse der Kathode verlaufen soll, bei symmetrischer Anordnung der Anode jedoch durch ein äußeres Magnetfeld aus dieser Richtung abgelenkt würde, dann kann durch eine entsprechende unsymmetrische Anordnung der Anode der Einfluß dieses Magnetfeldes auf den Lichtbogen kompensiert werden. Der Lichtbogen kann somit konzentrisch zur Kathodenachse verlaufen oder auch in gewünschter Weise gegenüber dieser ausgelenkt werden.

Weiterhin ist es möglich, das gesamte elektrische Strömungsfeld der Anode so auszubilden, daß gewünschte Strömungsbewegungen im Schmelzbad erzeugt werden, so daß in gewissem Maße ein Umrühren des Bades realisiert wird.

Der Aufbau der erfindungsgemäßen Anode kann auf verschiedene Weise realisiert werden. Zum einen ist es möglich, die Anode in ihrem Querschnitt oder ihrer Leitfähigkeit so auszuführen, daß das elektrische Strömungsfeld in gewünschter Weise aufgebaut ist und der Lichtbogen in Richtung zum Beispiel der Abstichöffnung ausgelenkt wird. Eine zweite Möglichkeit besteht darin, die Anode in Umfangsrichtung in mehrere Segmente zu unterteilen, die elektrisch nicht direkt miteinander verbunden sind. Diese Segmente werden dann unsymmetrisch in gewünschter Weise über den Umfang des Ofens verteilt. So ist eine größere Lücke zwischen den Segmenten auf der Seite, auf der sich die exzentrisch angeordnete Abstichöffnung oder eine aus verschiedenen Gründen dort befindliche, zu beseitigende Kaltzone befindet, zur Auslenkung des Lichtbogens zu dieser Seite hin geeignet.

Die Teile der Anode, die im Inneren des Ofens aus elektrisch leitendem Material bestehen, können in verschiedener Weise kombiniert werden, um den gewünschten Effekt zu erreichen. So ist es möglich, die verwendeten Materialien zu variieren, in dem zum Beispiel im Falle der Verwendung von Karbon-Magnesit der Anteil des Kohlenstoffes erhöht bzw. gesenkt wird. So weisen die Steine der elektrisch leitenden ff-Ausmauerung, die in Bezug auf die Kathodenachse entgegengesetzt zur gewünschten Auslenkung des Lichtbogens liegen, einen höheren Kohlenstoffanteil auf als die auf der Seite der Auslenkung.

Es ist auch möglich, anstelle der Steine, die einen höheren Kohlenstoffanteil aufweisen, einen Teil der Ausmauerung, der nicht in direktem Kontakt mit der Schmelze steht, aus Graphitsteinen zu mauern. In diesem Fall ist es möglich, über die unterschiedliche Höhe dieses Teils der Ausmauerung zusätzlich Einfluß auf das elektrische Strömungsfeld zu nehmen.

Um gezielt die Bewegung der Schmelze zu beinflussen, können benachbarte Bereiche der Anode unterschiedliche elektrische Widerstände aufweisen, so daß die Strömungsfeldstärkedifferenzen Einfluß auf die Bewegung nehmen.

Die Erfindung wird im folgenden anhand von in den Figuren dargestellten Ausführungsbeispielen näher erläutert. Es zeigen:
Fig. 1 eine schematische Schnittdarstellung eines Gleichstrom-Lichtbogenofens entsprechend einer ersten Ausführungsform,
Fig. 2 eine schematische Schnittdarstellung einer zweiten Ausführungsform eines Gleichstrom-Lichtbogenofens mit exzentrischem Bodenabstich, und
Fig. 3 eine Schnittdarstellung des Ofens gemäß Fig. 2 von oben.

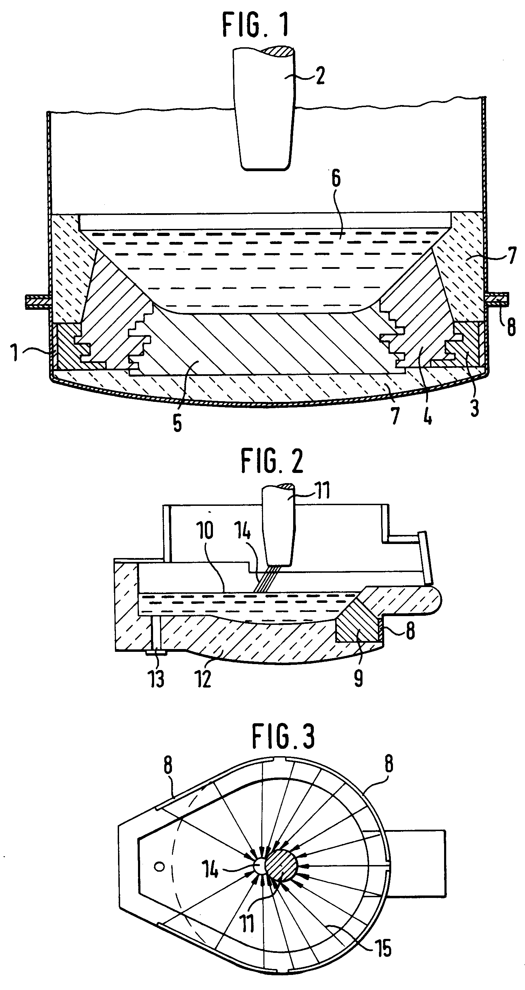

Der Lichtbogenofen gemäß Fig. 1 weist einen ringförmigen, aus Kupfer bestehenden Stromleiter 1, der einen Teil der Anode bildet, auf. Eine sich in vertikaler Richtung erstreckende und in dieser Richtung verstellbare Kathode 2 befindet sich zentrisch oberhalb der Schmelze 6. Auf dem aus vorzugsweise Stahl bestehenden Bodenteil ist eine feuerfeste isolierende Ausmauerung 7 vorgesehen. An dem Stromleiter 1 ist, in direkter elektrisch leitender Verbindung mit diesem, ein ringförmiger Teil der Ausmauerung, der aus Graphitsteinen 3 besteht, vorgesehen. An diesen ringförmigen Teil aus Graphitsteinen 3 schließt sich ein weiterer Teil der Ausmauerung, der aus elektrisch leitendem ff-Material 4 besteht, an. Beide Bereiche sind miteinander verschränkt. Der Bereich der Ausmauerung, der aus elektrisch leitendem ff-Material 4 besteht, ist ebenfalls ringförmig ausgeführt. Dieser Bereich besteht vorzugsweise aus Karbon-Magnesit-Steinen.

Im Mittelbereich des Ofens, der mit der Schmelze 6 in direkten Kontakt kommt, ist eine Stampfmasse 5, die vorzugsweise hauptsächlich aus Magnesit besteht, eingebracht. Durch verzahnte Ausführung der elektrisch leitenden ff-Ausmauerung 4 in Richtung des mittleren Ofenbereiches, der durch die monolithische Stampfmasse 5 gebildet wird, kommt es zur innigen Verbindung beider Bereiche.

Zwischen der Kathode 2 und der Schmelze 6 bildet sich im Betrieb des Lichtbogenofens ein Lichtbogen aus. Dieser soll beispielsweise in Richtung der Kathodenachse verlaufen, wird aber durch ein äußeres Magnetfeld aus dieser Richtung abgelenkt. Um diese Ablenkung zu kompensieren, wird nun die Anode so ausgebildet, daß sich ihre elektrischen Eigenschaften in Umfangsrichtung verändern, d.h. der über die Anode fließende Strom hat eine sich in Umfangsrichtung ändernde Stärke, so daß eine in Bezug auf die Kathodenachse unsymmetrische Stromverteilung auftritt. Dabei wird der Lichtbogen aufgrund dieser Unsymmetrie zu der Seite abgelenkt, die in Bezug auf die Kathodenachse der Seite entgegengesetzt ist, auf der der Strom durch die Anode die größte Stärke hat. Somit kann eine bestehende Ablenkung des Lichtbogens so kompensiert werden, daß er wieder in Richtung der Kathodenachse verläuft. Der Lichtbogen kann aber auch durch die unsymmetrische Stromverteilung in eine gewünschte Richtung abgelenkt werden, wobei die etwaige Ablenkung durch ein externes Magnetfeld zu berücksichtigen ist. Die unsymmetrische Stromverteilung wird bei dem Lichtbogenofen nach Fig. 1 dadurch erreicht, daß die Widerstandswerte des Stromleiters 1 und/oder der Ausmauerung aus Graphitsteinen 3 und/oder der Ausmauerung aus elektrisch leitendem ff-Material 4 sich in Umfangsrichtung ändern.

Der Lichtbogenofen gemäß Fig. 2 und 3 weist eine Anode aus einem Stromleiter 8 aus Kupfer und einer Ausmauerung aus einem elektrisch leitenden ff-Material 9, die über Graphitsteine (in Fig. 2 nicht dargestellt) in elektrischer Verbindung einerseits mit dem Stromleiter 8 und andererseits mit der Schmelze 10 steht, eine Kathode 11 und eine Ausmauerung aus elektrisch isolierendem ff-Material 12 auf. Die Schmelze 10 kann durch eine in Bezug auf die vertikale Ofenachse, die mit der Kathodenachse zusammenfällt, exzentrisch angeordnete Bodenabstichöffnung 13, die in nicht dargestellter Weise verschließbar ist, in geeigneten Zeitabständen abgezogen werden.

Aufgrund der exzentrischen Anordnung der Abstichöffnung 13 ist es sinnvoll, den Lichtbogen 14 in Richtung auf diese abzulenken. Eine derartige Ablenkung wird durch Einflußnahme auf die Ausbildung des elektrischen Strömungsfeldes erreicht, indem auf der der Abstichöffnung 13 in Bezug auf die Kathodenachse entgegengesetzten Seite des Lichtbogenofens die Ausmauerung aus dem elektrisch leitenden ff-Material 9 einen wesentlich geringeren elektrischen Widerstand aufweist als auf der Seite, auf der sich die Abstichöffnung 13 befindet. Hierdurch erwärmt der ausgelenkte Lichtbogen 14 (Brennfleck) die Schmelze 10 im Bereich der Abstichöffnung 13 stärker als in den anderen Bereichen, so daß günstige Verhältnisse für den Abstich gegeben sind.

Zusätzlicher Einfluß auf die Ausbildung des elektrischen Strömungsfeldes wird bei diesem Ofen dadurch genommen, daß der Stromleiter 8 auf der entgegengesetzt zur Abstichöffnung 13 gelegenen Seite über die Graphitsteine eine wesentlich größere Berührungsfläche mit der Ausmauerung aus elektrisch leitendem ff-Material 9 aufweist als auf der Seite, auf der sich die Abstichöffnung 13 befindet. Es ist vorteilhaft, den Stromleiter 8 in Form von mehreren in Umfangsrichtung hintereinander liegenden Segmenten auszubilden, die so angeordnet sind, daß eine größere Lücke in dem der Abstichöffnung 13 am nächsten liegenden Bereich vorgesehen ist.

Aus der Fig. 3, die eine Schnittdarstellung von oben auf einen Gleichstrom-Lichtbogenofen wiedergibt, ist ersichtlich, daß die Segmente der Anode und damit deren Leitfähigkeit in Bezug auf die Achse der Kathode 11 unsymmetrisch ausgebildet sind und dadurch das elektrische Strömungsfeld derart beeinflußt wird, daß der Brennfleck des Lichtbogens 14 gegenüber der Vertikalachse der Kathode 11 in Richtung zur Abstichöffnung 13 hin ausgelenkt wird. Aus Gründen der Übersichtlichkeit sind in schematischer Form Stromlinien 15 mit unterschiedlicher Dichte eingezeichnet, um die Ausbildung des Feldes zu verdeutlichen. So ist es durch den Aufbau der Anode möglich, den Lichtbogen 14 so weit in Richtung zur Abstichöffnung 13 hin auszulenken, daß sich die Schmelze 10 besonders im Bereich um diese herum erwärmt und damit ein sicheres Abstechen der Schmelze 10 gewährleistet wird.

## Patentansprüche

1. Anode für einen Gleichstrom-Lichtbogenofen, bei dem mindestens ein Teil des die Schmelze aufnehmenden Bereiches des Ofens auf der Innenseite mit einer elektrisch leitenden ff-Ausmauerung (3, 4; 9) versehen ist, die mit einem auf der Außenseite befindlichen ringförmigen Stromleiter (1; 8) aus Kupfer in elektrischer Verbindung steht, und bei dem eine Kathode (2; 11) in senkrechter Richtung oberhalb der Schmelze (6) angeordnet ist,
dadurch **gekennzeichnet**,
daß die elektrisch leitende Ausmauerung (3, 4; 9) hinsichtlich ihrer elektrischen Eigenschaften sich in Umfangsrichtung in bezug auf die vertikale Achse der Kathode (2; 11) ändernde Werte aufweist, derart, daß sie auf der einer exzentrisch angeordneten Abstichsöffnung (13) gegenüberliegenden Seite des Ofens einen geringeren elektrischen Widerstand aufweist.

2. Anode nach Anspruch 1,
dadurch gekennzeichnet, daß der Stromleiter (1; 8) aus in Umfangsrichtung hintereinanderliegenden Segmenten mit unterschiedlich großen elektrisch leitenden Berührungsflächen gegenüber der elektrisch leitenden Ausmauerung (3, 4; 9) besteht und die Zwischenräume zwischen den Segmenten in Umfangsrichtung unterschiedlich ausgebildet sind.

3. Anode nach einem der Ansprüche 1 und 2,
dadurch gekennzeichnet, daß die ff-Ausmauerung (3, 4) radial zur Achse der Kathode (2) aus Material mit unterschiedlicher elektrischer Leitfähigkeit besteht.

4. Anode nach einem der Ansprüche 1 bis 3,
dadurch gekennzeichnet, daß das Material der elektrisch leitenden ff-Ausmauerung (4; 9) ein Karbon-Magnesit mit unterschiedlichem Kohlenstoffanteil ist.

5. Anode nach einem der Ansprüche 1 bis 4,
dadurch gekennzeichnet, daß Bereiche der leitenden ff-Ausmauerung, die nicht in direkter Berührung mit der Schmelze (6) stehen, aus Graphitsteinen (3) gemauert sind und zwischen den Graphitsteinen (3) in Umfangsrichtung Lücken vorgesehen sind, die mit anderem elektrisch leitfähigen oder mit nichtleitfähigem Material ausgefüllt sind.

6. Anode nach einem der Ansprüche 1 bis 5,
dadurch gekennzeichnet, daß der elektrische Widerstand über den Ofenumfang zonenweise unterschiedlich ist.

7. Anode nach einem der Ansprüche 1 bis 6,
dadurch gekennzeichnet, daß der in Umfangsrichtung segmentförmig geteilte Stromleiter (8) in dem Bereich, der der Abstichsöffnung am nächsten liegt, eine Unterbrechung aufweist.

## Claims

1. Anode for a direct-current arc furnace, in which the inside of at least one part of the area of the furnace receiving the melt is provided with an electrically conductive refractory lining (3, 4; 9), which is electrically connected to a ring-shaped copper current conductor (1; 8) located on the outside, and in which a cathode (2; 11) is arranged vertically above the melt (6), characterised in that with respect to its electrical properties, the electrically conductive lining (3, 4; 9) has values changing in peripheral direction relative to the vertical axis of the cathode (2; 11) in such a way that it has a lower electrical resistance on the side of the furnace opposite an eccentrically disposed tapping hole (13).

2. Anode according to Claim 1, characterised in that the current conductor (1; 8) comprises segments located one behind the other in peripheral direction with contact surfaces with variable electrical conductivity relative to the electrically conductive lining (3, 4; 9), and the cavities between the segments have different constructions in peripheral direction.

3. Anode according to one of Claims 1 and 2, characterised in that radially to the axis of the cathode (2), the refractory lining (3, 4) is made from material with variable electrical conductivity.

4. Anode according to one of Claims 1 to 3, characterised in that the material of the electrically conductive refractory lining (4; 9) is a carbon magnesite with variable carbon content.

5. Anode according to one of Claims 1 to 4, characterised in that areas of the conductive refractory lining not in direct contact with the melt (6) are constructed from graphite bricks (3), and gaps filled with a different electrically conductive or non-conductive material are provided between the graphite bricks (3) in peripheral direction.

6. Anode according to one of Claims 1 to 5, characterised in that the electrical resistance differs zone by zone over the periphery of the furnace.

7. Anode according to one of Claims 1 to 6, characterised in that the current conductor (8) divided into segments in peripheral direction has a break in the area located closest to the tapping hole.

## Revendications

1. Anode pour un four à arc à courant continu dans lequel au moins une partie de la région du four qui reçoit le bain fondu est munie, sur sa face intérieure, d'un revêtement réfractaire conducteur de l'électricité (3, 4 ; 9) qui est en liaison électrique avec un conducteur de courant (1 ; 8) en cuivre, de forme annulaire, qui se trouve sur la face extérieure, et dans lequel une cathode (2 ; 11) est disposée dans une direction verticale au-dessus du bain fondu (6),
caractérisée
en ce que le revêtement conducteur de l'électricité (3, 4 ; 9) présente, sous l'aspect de ses propriétés électriques, des valeurs qui varient dans la direction circonférentielle par rapport à l'axe vertical de la cathode (2 ; 11) de manière à présenter une plus faible résistance électrique sur le côté du four qui est à l'opposé d'une ouverture de coulée (13) disposée excentriquement.

2. Anode selon la revendication 1,
caractérisée en ce que le conducteur de courant (1 ; 8) est composé de segments, disposés l'un à la suite de l'autre dans la direction circonférentielle, qui présentent des surfaces de contact conductrices de l'électricité de grandeur variable avec le revêtement conducteur de l'électricité (3, 4 ; 9) et en ce que les intervalles libres entre les segments sont variables dans la direction circonférentielle.

3. Anode selon une des revendications 1 et 2,
caractérisée en ce que le revêtement réfractaire (3, 4) est composé d'un matériau possédant une conductibilité électrique variable, considérée dans la direction radiale relativement à l'axe de la cathode (2).

4. Anode selon une des revendications 1 à 3,
caractérisée en ce que le matériau du revêtement réfractaire conducteur de l'électricité (4 ; 9) est un carbone-magnésie possédant une proportion de carbone variable.

5. Anode selon une des revendications 1 à 4,
caractérisée en ce que des régions du revêtement réfractaire conducteur qui ne sont pas en contact direct avec le bain fondu (6) sont construites en briques de graphite (3) et entre les briques de graphite (3) sont ménagés des intervalles libres, considérés dans la direction circonférentielle, qui sont comblés d'un autre matériau conducteur de l'électricité ou non conducteur.

6. Anode selon une des revendications 1 à 5,
caractérisée en ce que la résistance électrique varie par zones sur la circonférence du four.

7. Anode selon une des revendications 1 à 6,
caractérisée en ce que le conducteur de courant (8) divisé en segments dans la direction circonférentielle, présente une interruption dans la région qui est la plus rapprochée de l'ouverture de coulée.
